# EUROPEAN PATENT APPLICATION

(11) **EP 4 583 027 A1**
(43) Date of publication of application: **09.07.2025**
(21) Application number: 24150482.8
(22) Date of filing: 05.01.2024
(51) Int. Cl.: G06Q 10/20, H02B 3/00, H01H 71/04

(54) **SWITCHGEAR SAFETY-CONTROLLED ASSISTANCE SYSTEM**

(71) Applicant: ABB SCHWEIZ AG, 5400 Baden (CH)
(72) Inventor: BOY, Felix, 69120 Heidelberg (DE); BOYACI, Aydin, 76337 Waldbronn (DE); KOZEL, Tomas, 635 00 Brno (CZ); LOSS, Theresa, 68167 Mannheim (DE); GITZEL, Ralf, 68165 Mannheim (DE); PENNER, Simon, 67574 Osthofen (DE); MIGUNOV, Vadim, 68526 Ladenburg (DE)
(74) Representative: Maiwald GmbH

(57) **Abstract**

The present invention relates to a switchgear safety-controlled assistance system, comprising:
- a communication device (40);
- at least one sensor (20); and
- a processing unit (30);

wherein the communication device is configured to receive information regarding a task to be performed on a switchgear (10);
wherein the communication device is configured to provide the information regarding the task to be performed on the switchgear to the processing unit;
wherein the at least one sensor is configured to sense data associated with an event and/or status change of the switchgear associated with an operator performing the task and/or having performed the task;
wherein the at least one sensor is configured to provide the data associated with the event and/or the status change of the switchgear associated with the operator performing the task and/or having performed the task to the processing unit; and
wherein the processing unit is configured to determine whether the task is not being and/or has not been performed correctly, wherein the determination comprises utilization of the information regarding the task to be performed on the switchgear and the data associated with the event and/or the status change of the switchgear associated with the operator performing the task and/or having performed the task.

## Description

### FIELD OF THE INVENTION

The present invention relates to a switchgear safety-controlled assistance system, a switchgear safety-controlled assistance method, and a computer program element.

### BACKGROUND OF THE INVENTION

Switchgear in power stations require regular maintenance work, such as repairs, exchanging components, retrofitting parts etc. This work is commonly carried out by trained personnel based on certain safety regulations. The classic approach of having trained personal following written safety rules they learned in trainings involves a considerable risk due to human errors. Recent approaches, as for example described in [CLOSER - Collaborative Operations for Electrical Systems (online), https://new.abb.com/medium-voltage/service/technical-support-and-repairs/closer,] try to reduce this risk by providing some kind of personnel safety system, that leads through the maintenance process and provides guides, often by digital means, supported by additional safety equipment in the switchgear or brought with the person.

However, it cannot be determined if the task is being performed correctly or has been performed correctly.

There is a need to address this issue.

### SUMMARY OF THE INVENTION

Therefore, it would be advantageous to have an improved technique to in carrying out maintenance work on a switchgear.

The object of the present invention is solved with the subject matter of the independent claims, wherein further embodiments are incorporated in the dependent claims.

In a first aspect, there is provided a switchgear safety-controlled assistance system, comprising:
- a communication device;
- at least one sensor; and
- a processing unit.

The communication device is configured to receive information regarding a task to be performed on a switchgear. The communication device is configured to provide the information regarding the task to be performed on the switchgear to the processing unit. The at least one sensor is configured to sense data associated with an event and/or status change of the switchgear associated with an operator performing the task and/or having performed the task. The at least one sensor is configured to provide the data associated with the event and/or the status change of the switchgear associated with the operator performing the task and/or having performed the task to the processing unit. The processing unit is configured to determine whether the task is not being and/or has not been performed correctly. The determination comprises utilization of the information regarding the task to be performed on the switchgear and the data associated with the event and/or the status change of the switchgear associated with the operator performing the task and/or having performed the task.

Thus, information such as what task is to be performed is used in association with sensor data of what is happening and/or happened to the switchgear within a feedback system to determine if the task was performed incorrectly, enabling remedial action to be taken.

In an example, the processing unit is configured to determine whether the task is being and/or has been performed correctly, the determination comprising utilization of the information regarding the task to be performed on the switchgear and the data associated with the event and/or the status change of the switchgear associated with the operator performing the task and/or having performed the task.

In this way, by determining that the task was performed correctly information can be given to the operator to that effect, and an audit that the task was correctly performed can be taken.

In an example, the processing unit is configured to permit an action associated with and/or an operation of the switchgear upon the determination that the task is being performed correctly and/or has been performed correctly.

In this manner, if the task was performed correctly, the switchgear can be permitted to operate in the normal manner, other it can be prohibited from operating. Also, if the task is being performed correctly different stages of the task may require the switchgear to be in a state that permits the task. Thus, if a first part of a task required work in one compartment and has been carried out correctly the processing unit can then unlock a door to another compartment of the switchgear to permit a second part of the task to be performed, but the door is not unlocked until the first part of the task has been correctly performed.

In an example, the processing unit is configured to stop an operation of the switchgear upon the determination that the task is not being and/or has not been performed correctly.

In an example, the processing unit is configured to control the communication device to provide a message to the operator upon the determination that the task is not being and/or has not been performed correctly.

Thus, a warning can be provided to the operator that they are doing something incorrectly, such as opening a switch cabinet on the left when they need to open a switch cabinet on the right to perform the task, or that they did not fully close a compartment door after finishing their work. The processing unit uses the task information and sensor data to determine that an incorrect action is being performed or has been performed and makes the operator aware of this situation.

In an example, the processing unit is configured to determine an alternative action to a present action being performed by the operator, the determination comprising utilization of the information regarding the task to be performed on the switchgear and the data associated with the event and/or the status change of the switchgear associated with the operator performing the task. The processing unit is configured to control the communication device to provide a message to the operator regarding the alternative action.

Thus, if the operator is opening a switch cabinet on the left when they need to open a switch cabinet on the right to perform the task, the processing unit uses the information about the task and sensor data to determine that an incorrect action is being performed, and knows what the correct action should be, and provides this information to the operator - such as "the task requires you to open the switch cabinet on the right, and not on the left".

In an example, the processing unit is configured to determine an alternative action to a past action performed by the operator, the determination comprising utilization of the information regarding the task to be performed on the switchgear and the data associated with the event and/or the status change of the switchgear associated with the operator performing the task and/or having performed the task. The processing unit is configured to control the communication device to provide a message to the operator regarding the alternative action.

Thus, if the operator did not correctly close a compartment door after working on a task, for example where a handle was not turned fully to engage the locking mechanism the processing unit uses the information about the task and sensor data to determine this, and knows what the correct action should be, and provides this information to the operator - such as "the compartment door is not fully locked - turn the handle fully clockwise to the click lock position".

In an example, the communication device is configured to receive information regarding the task performed on the switchgear. The communication device is configured to provide the information regarding the task performed on the switchgear to the processing unit. The determination whether the task has not been performed correctly comprises utilization of the information regarding the task performed on the switch gear.

Thus, for example when the operator considers that they have completed the task they can indicate this on the communication device. The processing unit can utilize this along with the sensor data to determine that the task has not actually been completed, and for example the operator could be notified.

In an example, the communication device is configured to receive information regarding the task being performed on the switchgear. The communication device is configured to provide the information regarding the task being performed on the switchgear to the processing unit. The determination whether the task is not being performed correctly comprises utilization of the information regarding the task being performed on the switchgear.

In this manner, an operator could indicate that they are progressing to the next part of a task for example clicking on a next item on a flowchart presented on the communication device. The processing unit can utilize this along with the sensor data to determine that the previous part of the task has not actually been completed, and the operator cannot yet progress to the next part of the task, and for example the operator could be notified.

In a second aspect, there is provided a switchgear safety-controlled assistance method, comprising:
receiving, by a communication device, information regarding a task to be performed on a switchgear;
providing the information regarding the task to be performed on the switchgear to a processing unit;
sensing data, by at least one sensor, data associated with an event and/or status change of the switchgear associated with an operator performing the task and/or having performed the task;
providing the data associated with the event and/or the status change of the switchgear associated with the operator performing the task and/or having performed the task to the processing unit; and
determining, by the processing unit, whether the task is not being and/or has not been performed correctly, wherein the determining comprises utilizing the information regarding the task to be performed on the switchgear and the data associated with the event and/or the status change of the switchgear associated with the operator performing the task and/or having performed the task.

In an example, the method comprises controlling, by the processing unit, the communication device to provide a message to the operator upon the determination that the task is not being and/or has not been performed correctly.

In an example, the method comprises determining, by the processing unit, an alternative action to a present action being performed by the operator, the determining comprising utilizing the information regarding the task to be performed on the switchgear and the data associated with the event and/or the status change of the switchgear associated with the operator performing the task, and the method comprises controlling, by processing unit, the communication device to provide a message to the operator regarding the alternative action.

In an example, the method comprises determining, by the processing unit, an alternative action to a past action performed by the operator, the determining comprising utilizing the information regarding the task to be performed on the switchgear and the data associated with the event and/or the status change of the switchgear associated with the operator performing the task and/or having performed the task, and the method comprises controlling, by processing unit, the communication device to provide a message to the operator regarding the alternative action.

In an example, the method comprises receiving, by the communication device, information regarding the task performed on the switchgear and providing the information regarding the task performed on the switchgear to the processing unit, and the determining whether the task has not been performed correctly comprises utilizing the information regarding the task performed on the switchgear.

According to another aspect, there is provided a computer program element controlling one or more of the systems as previously described which, if the computer program element is executed by a processor, is adapted to perform the method as previously described.

According to another aspect, there is provided a computer readable medium having stored a computer element as previously described.

The computer program element can for example be a software program but can also be a FPGA, a PLD or any other appropriate digital means.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an exemplar switchgear safety-controlled assistance system along with a switchgear;
Fig. 2 shows an exemplar a switchgear safety-controlled assistance system; and
Fig, 3 shows a representation of a feedback loop within an exemplar switchgear safety-controlled assistance system.

### DETAILED DESCRIPTION OF EMBODIMENTS

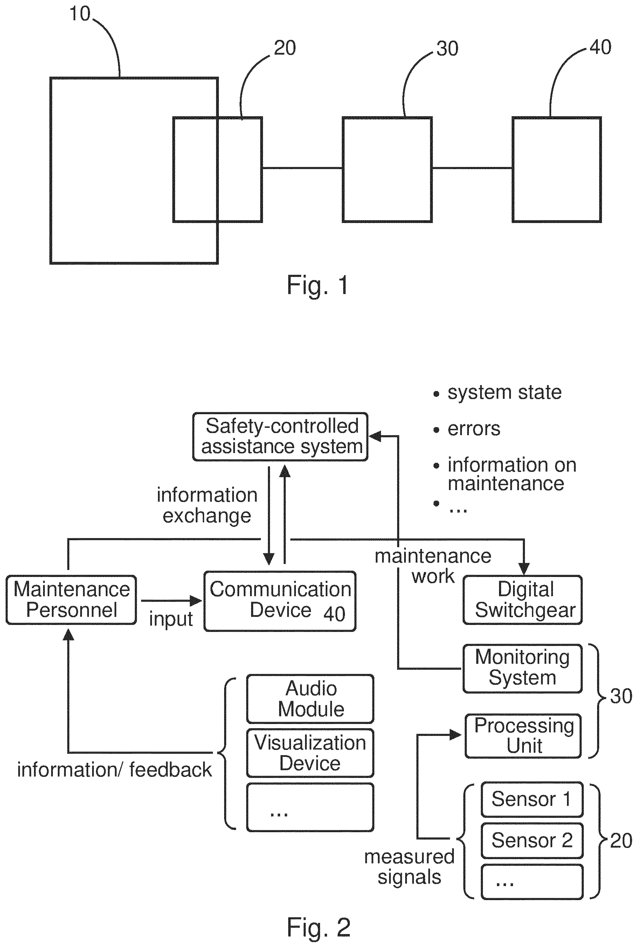

Figs. 1-3 relate to a switchgear safety-controlled assistance system and a switchgear safety-controlled assistance method.

Fig. 1 shows an example of a switchgear safety-controlled assistance system, comprising:
- a communication device 40;
- at least one sensor 20; and
- a processing unit 30.
The communication device is configured to receive information regarding a task to be performed on a switchgear 10. The communication device is configured to provide the information regarding the task to be performed on the switchgear to the processing unit. The at least one sensor is configured to sense data associated with an event and/or status change of the switchgear associated with an operator performing the task and/or having performed the task. The at least one sensor is configured to provide the data associated with the event and/or the status change of the switchgear associated with the operator performing the task and/or having performed the task to the processing unit. The processing unit is configured to determine whether the task is not being and/or has not been performed correctly. The determination comprises utilization of the information regarding the task to be performed on the switchgear and the data associated with the event and/or the status change of the switchgear associated with the operator performing the task and/or having performed the task.

Thus, information such as what task is to be performed is used in association with sensor data of what is happening and/or happened to the switchgear within a feedback system to determine if the task was performed incorrectly, enabling remedial action to be taken.

In an example, the processing unit is configured to determine whether the task is being and/or has been performed correctly, the determination comprising utilization of the information regarding the task to be performed on the switchgear and the data associated with the event and/or the status change of the switchgear associated with the operator performing the task and/or having performed the task.

In this way, by determining that the task was performed correctly information can be given to the operator to that effect, and an audit that the task was correctly performed can be taken.

In an example, the processing unit is configured to permit an action associated with and/or an operation of the switchgear upon the determination that the task is being performed correctly and/or has been performed correctly.

In this manner, if the task was performed correctly, the switchgear can be permitted to operate in the normal manner, other it can be prohibited from operating. Also, if the task is being performed correctly different stages of the task may require the switchgear to be in a state that permits the task. Thus, if a first part of a task required work in one compartment and has been carried out correctly the processing unit can then unlock a door to another compartment of the switchgear to permit a second part of the task to be performed, but the door in not unlocked until the first part of the task has been correctly performed.

In an example, the processing unit is configured to stop an operation of the switchgear upon the determination that the task is not being and/or has not been performed correctly.

In an example, the processing unit is configured to control the communication device to provide a message to the operator upon the determination that the task is not being and/or has not been performed correctly.

Thus, a warning can be provided to the operator that they are doing something incorrectly, such as opening a switch cabinet on the left when they need to open a switch cabinet on the right to perform the task, or that they did not fully close a compartment door after finishing their work. The processing unit uses the task information and sensor data to determine that an incorrect action is being performed or has been performed and makes the operator aware of this situation.

In an example, the processing unit is configured to determine an alternative action to a present action being performed by the operator, the determination comprising utilization of the information regarding the task to be performed on the switchgear and the data associated with the event and/or the status change of the switchgear associated with the operator performing the task. The processing unit is configured to control the communication device to provide a message to the operator regarding the alternative action.

Thus, if the operator is opening a switch cabinet on the left when they need to open a switch cabinet on the right to perform the task, the processing unit uses the information about the task and sensor data to determine that an incorrect action is being performed, and knows what the correct action should be, and provides this information to the operator - such as "the task requires you to open the switch cabinet on the right, and not on the left".

In an example, the processing unit is configured to determine an alternative action to a past action performed by the operator, the determination comprising utilization of the information regarding the task to be performed on the switchgear and the data associated with the event and/or the status change of the switchgear associated with the operator performing the task and/or having performed the task. The processing unit is configured to control the communication device to provide a message to the operator regarding the alternative action.

Thus, if the operator did not correctly close a compartment door after working on a task, for example where a handle was not turned fully to engage the locking mechanism the processing unit uses the information about the task and sensor data to determine this, and knows what the correct action should be, and provides this information to the operator - such as "the compartment door is not fully locked - turn the handle fully clockwise to the click lock position".

In an example, the communication device is configured to receive information regarding the task performed on the switchgear. The communication device is configured to provide the information regarding the task performed on the switchgear to the processing unit. The determination whether the task has not been performed correctly comprises utilization of the information regarding the task performed on the switchgear.

Thus, for example when the operator considers that they have completed the task they can indicate this on the communication device. The processing unit can utilize this along with the sensor data to determine that the task has not actually been completed, and for example the operator could be notified.

In an example, the communication device is configured to receive information regarding the task being performed on the switchgear. The communication device is configured to provide the information regarding the task being performed on the switchgear to the processing unit. The determination whether the task is not being performed correctly comprises utilization of the information regarding the task being performed on the switchgear.

In this manner, an operator could indicate that they are progressing to the next part of a task for example clicking on a next item on a flowchart presented on the communication device. The processing unit can utilize this along with the sensor data to determine that the previous part of the task has not actually been completed, and the operator cannot yet progress to the next part of the task, and for example the operator could be notified.

In a second aspect here is provided a switchgear safety-controlled assistance method, comprising:
receiving, by a communication device, information regarding a task to be performed on a switchgear;
providing the information regarding the task to be performed on the switchgear to a processing unit;
sensing data, by at least one sensor, data associated with an event and/or status change of the switchgear associated with an operator performing the task and/or having performed the task;
providing the data associated with the event and/or the status change of the switchgear associated with the operator performing the task and/or having performed the task to the processing unit; and
determining, by the processing unit, whether the task is not being and/or has not been performed correctly, wherein the determining comprises utilizing the information regarding the task to be performed on the switchgear and the data associated with the event and/or the status change of the switchgear associated with the operator performing the task and/or having performed the task.

In an example, the method comprises determining, by the processing unit, whether the task is being and/or has been performed correctly, the determining comprising utilizing the information regarding the task to be performed on the switchgear and the data associated with the event and/or the status change of the switchgear associated with the operator performing the task and/or having performed the task.

In an example, the method comprises permitting, by the processing unit, an action associated with and/or an operation of the switchgear upon the determining that the task is being performed correctly and/or has been performed correctly.

In an example, the method comprises stopping, by the processing unit, an operation of the switchgear upon the determination that the task is not being and/or has not been performed correctly.

In an example, the method comprises controlling, by the processing unit, the communication device to provide a message to the operator upon the determination that the task is not being and/or has not been performed correctly.

In an example, the method comprises determining, by the processing unit, an alternative action to a present action being performed by the operator, the determining comprising utilizing the information regarding the task to be performed on the switchgear and the data associated with the event and/or the status change of the switchgear associated with the operator performing the task, and the method comprises controlling, by processing unit, the communication device to provide a message to the operator regarding the alternative action.

In an example, the method comprises determining, by the processing unit, an alternative action to a past action performed by the operator, the determining comprising utilizing the information regarding the task to be performed on the switchgear and the data associated with the event and/or the status change of the switchgear associated with the operator performing the task and/or having performed the task, and the method comprises controlling, by processing unit, the communication device to provide a message to the operator regarding the alternative action.

In an example, the method comprises receiving, by the communication device, information regarding the task performed on the switchgear and providing the information regarding the task performed on the switchgear to the processing unit, and the determining whether the task has not been performed correctly comprises utilizing the information regarding the task performed on the switchgear.

In an example, the method comprises receiving, by the communication device, information regarding the task being performed on the switchgear and providing the information regarding the task being performed on the switchgear to the processing unit, and wherein the determining whether the task is not being performed correctly comprises utilizing the information regarding the task being performed on the switchgear.

Thus, the new development relates to a safety-controlled assistance system (SCAS) for the service work in what can be termed a digital switchgear, relating to maintenance actions on a real switchgear. Presently, maintenance actions at the equipment are commonly performed by trained personnel, carrying out service tasks that are described by safety regulations. To avoid human errors, recent approaches provide for assistance by some digital system enabling guidance to the worker by audio signals or visualization of the tasks to be performed. However, the inventors realized that such systems lack a control and feedback mechanism to check, whether the intended task has actually been performed correctly. The new safety-controlled assistance system was developed overcome this problem, leading to an assistance system incorporating such a control and feedback, by using different kinds of sensors to control whether the maintenance task have been carried out correctly.

The safety-controlled assistance system and method are now described in further specific detail, where reference is made to figs. Figs. 2-3.

The safety-controlled assistance system (SCAS) for the maintenance work in switchgear includes a monitoring system supported by sensors in the system to be maintained. The assistance system can verify, whether a task has been fulfilled correctly. In case of faulty task fulfillment, it can block further operations to avoid errors of safety hazards or propose alternative measures to overcome maintenance problems. With this control and feedback, the gap between giving guidance to the maintenance personal and the control whether tasks have been fulfilled correctly can be closed, providing for additional safety on site. Furthermore, such a system may provide for less downtime and less training required and provides for valuable data about the system state.

The SCAS comprises at least two main components: first, some monitoring system including at least one sensor and an evaluation algorithm to detect events and status changes of the switchgear and second at least one communication device to inform the maintenance worker and receive inputs. This latter device can for example be attached to the switchgear or may be a mobile device receiving information from the safety-controlled assistance system. The SCAS itself may also be located at the switchgear, it may be installed on the communication device, or it may be a cloud based system stored for example on a server.

Fig. 2 depicts the safety-controlled assistance system schematically. Fig. 2 also indicates the interactions between the different components of the system.

The SCAS enables to:
- Giving guidance for service tasks by visualization or audio signals
- Detect the position of the maintenance personnel with respect to the electrical equipment
- Check the integrity of the equipment envelop
- Access built-in sensor data from the electrical equipment

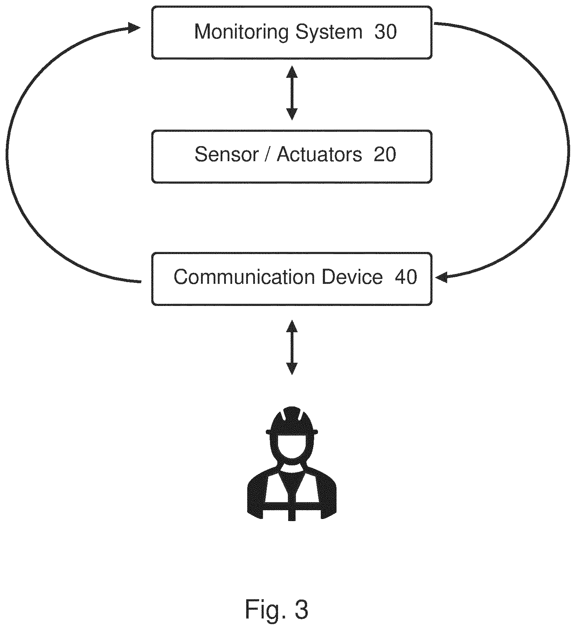

Also, the safety-controlled assistance system (SCAS) enables to check, whether the desired service task has been carried out correctly. To achieve this kind of feedback loop (cf. Fig. 3), the SCAS has at least two main components and may involve several optional parts.

The first main component is a monitoring system, which comprises a processing unit receiving measured signals from sensors and converting them to useful information such as variables describing the system state, information about possible errors, data about the maintenance tasks and their fulfillment during service work and more. To provide the required data for the monitoring system, at least one sensor is used to measure some physical quantity in the switchgear, allowing to assess the correct fulfillment of the maintenance work and gathering further information about the system state. However, in a common case, a variety of sensors could be used including for example:

### Position sensors

∘ Translatory sensors
∘ Rotary encoders
∘ End stop sensors
   **Vibrations sensors**
   **Laser sensors**
   **Temperature sensors**
∘ Point sensors
∘ Infrared sensors
   **Electromagnetic Sensors**
∘ Current sensors
∘ Voltage sensors
∘ Magnetic field sensors
   **Audio Sensors**
   **Visual Sensors**
∘ Cameras (incl. infrared)
∘ Radar sensors
∘ Lidar sensors
   **Chemical Sensors**
   **Pressure Sensors**
   **Humidity Sensors**
And other sensors can also be utilized as well as door actuators and switches.

The processed information is then transmitted to a communication device, acting as an interface between the SCAS and the maintenance personnel. This device may be attached to the switchgear or be incorporated as a mobile device. Its function is to receive the information from the SCAS and make it accessible and interpretable for the maintenance personnel. This process can be done in different ways, for example by:
**Audio signals like**
   ∘ Natural speech
   ∘ Acoustic noise
   ∘ Control tones
**Visualization in form of**
   ∘ Screen
   ∘ Projection device
   ∘ AR/VR glasses
**Other indicators, e.g.**
   ∘ LEDs
   ∘ Haptic feedback
   and information can be provided in other different ways.

Moreover, the maintenance worker may provide input to the communication device, which then sends this data back to the SCAS. Such input may for example be realized in form of
- Physical buttons
- Audio Input
- An interactive screen
- Gestures
or similar.

The SCAS itself may be located in the switchgear together or separate from the maintenance system, incorporated to the communication device, or cloud based and stored for example on a sever. An important feature of the SCAS is to control the proceeding of the service work. Therefore, it may actuate certain actions in the switchgear:
Access the control of the switchgear:
- Block doors or locking mechanisms in the switchgear
- Shut down the electrical equipment or it's parts
- Send audio/visual warnings to the maintenance personnel and remote warning signals to others (e.g., other control personnel)
- Propose alternative ways to overcome problems during the maintenance work

The following relates to several use case scenarios of the SCAS, that are non-limiting, as there are many more different further scenarios.

### Use Case 1: Maintenance personnel accessing wrong equipment

The worker specifies through the communication device to the SCAS he is going to work on switchgear panel A and starts the work. The sensors of the SCAS detect the protective cover of switchgear panel B has been opened and issues audio and visual warning through the communication device to the worker and blocks any further operation on panel B. If the warning is not sufficient and the worker presence is detected inside the panel B, the automatic shutdown of panel B is triggered and an alarm is sent to the control room indicating shutdown due to personnel presence in live equipment.

### Use Case 2: SCAS handling access control for whole switchgear

The worker specifies through the communication device to the SCAS that he is going to work on switchgear panel A and starts the work. Only the door of switchgear A are released for opening and the worker cannot open any other switchgear door.

### Use case 3: SCAS checks for safe switchgear status after maintenance work finishes

Maintenance crew was working on a switchgear panel and specifies to the SCAS the work is finished. Using the sensors SCAS checks for any irregularity in the switchgear panel A (not closed covers or doors, objects forgotten inside or other irregularity). Only if the checks are successful, the panel A can be reenergized, otherwise a warning is issues to the maintenance crew with description of the irregularity found.

In another exemplary embodiment, a computer program or computer program element is provided that is characterized by being configured to execute the method steps of the method according to one of the preceding embodiments, on an appropriate processor or system.

The computer program element might therefore be stored on a computer unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

## Claims

1. A switchgear safety-controlled assistance system, comprising:
- a communication device (40);
- at least one sensor (20); and
- a processing unit (30);
wherein the communication device is configured to receive information regarding a task to be performed on a switchgear (10);
wherein the communication device is configured to provide the information regarding the task to be performed on the switchgear to the processing unit;
wherein the at least one sensor is configured to sense data associated with an event and/or status change of the switchgear associated with an operator performing the task and/or having performed the task;
wherein the at least one sensor is configured to provide the data associated with the event and/or the status change of the switchgear associated with the operator performing the task and/or having performed the task to the processing unit; and
wherein the processing unit is configured to determine whether the task is not being and/or has not been performed correctly, wherein the determination comprises utilization of the information regarding the task to be performed on the switchgear and the data associated with the event and/or the status change of the switchgear associated with the operator performing the task and/or having performed the task.

2. Switchgear safety-controlled assistance system according to claim 1, wherein the processing unit is configured to determine whether the task is being and/or has been performed correctly, the determination comprising utilization of the information regarding the task to be performed on the switchgear and the data associated with the event and/or the status change of the switchgear associated with the operator performing the task and/or having performed the task.

3. Switchgear safety-controlled assistance system according to claim 2, wherein the processing unit is configured to permit an action associated with and/or an operation of the switchgear upon the determination that the task is being performed correctly and/or has been performed correctly.

4. Switchgear safety-controlled assistance system according to any of claims 1-3, wherein the processing unit is configured to stop an operation of the switchgear upon the determination that the task is not being and/or has not been performed correctly.

5. Switchgear safety-controlled assistance system according to any of claims 1-4, wherein the processing unit is configured to control the communication device to provide a message to the operator upon the determination that the task is not being and/or has not been performed correctly.

6. Switchgear safety-controlled assistance system according to any of claims 1-5, wherein the processing unit is configured to determine an alternative action to a present action being performed by the operator, the determination comprising utilization of the information regarding the task to be performed on the switchgear and the data associated with the event and/or the status change of the switchgear associated with the operator performing the task, and wherein the processing unit is configured to control the communication device to provide a message to the operator regarding the alternative action.

7. Switchgear safety-controlled assistance system according to any of claims 1-6, wherein the processing unit is configured to determine an alternative action to a past action performed by the operator, the determination comprising utilization of the information regarding the task to be performed on the switchgear and the data associated with the event and/or the status change of the switchgear associated with the operator performing the task and/or having performed the task, and wherein the processing unit is configured to control the communication device to provide a message to the operator regarding the alternative action.

8. Switchgear safety-controlled assistance system according to any of claims 1-7, wherein the communication device is configured to receive information regarding the task performed on the switchgear, wherein the communication device is configured to provide the information regarding the task performed on the switchgear to the processing unit, and wherein the determination whether the task has not been performed correctly comprises utilization of the information regarding the task performed on the switchgear.

9. Switchgear safety-controlled assistance system according to any of claims 1-8, wherein the communication device is configured to receive information regarding the task being performed on the switchgear, wherein the communication device is configured to provide the information regarding the task being performed on the switchgear to the processing unit, and wherein the determination whether the task is not being performed correctly comprises utilization of the information regarding the task being performed on the switchgear.

10. A switchgear safety-controlled assistance method, comprising:
receiving, by a communication device, information regarding a task to be performed on a switchgear;
providing the information regarding the task to be performed on the switchgear to a processing unit;
sensing data, by at least one sensor, data associated with an event and/or status change of the switchgear associated with an operator performing the task and/or having performed the task;
providing the data associated with the event and/or the status change of the switchgear associated with the operator performing the task and/or having performed the task to the processing unit; and
determining, by the processing unit, whether the task is not being and/or has not been performed correctly, wherein the determining comprises utilizing the information regarding the task to be performed on the switchgear and the data associated with the event and/or the status change of the switchgear associated with the operator performing the task and/or having performed the task.

11. Method according to claim 10, wherein the method comprises controlling, by the processing unit, the communication device to provide a message to the operator upon the determination that the task is not being and/or has not been performed correctly.

12. Method according to any of claims 10-11, wherein the method comprises determining, by the processing unit, an alternative action to a present action being performed by the operator, the determining comprising utilizing the information regarding the task to be performed on the switchgear and the data associated with the event and/or the status change of the switchgear associated with the operator performing the task, and wherein the method comprises controlling, by processing unit, the communication device to provide a message to the operator regarding the alternative action.

13. Method according to any of claims 10-12, wherein the method comprises determining, by the processing unit, an alternative action to a past action performed by the operator, the determining comprising utilizing the information regarding the task to be performed on the switchgear and the data associated with the event and/or the status change of the switchgear associated with the operator performing the task and/or having performed the task, and wherein the method comprises controlling, by processing unit, the communication device to provide a message to the operator regarding the alternative action.

14. Method according to any of claims 10-13, wherein the method comprises receiving, by the communication device, information regarding the task performed on the switchgear and providing the information regarding the task performed on the switchgear to the processing unit, and wherein the determining whether the task has not been performed correctly comprises utilizing the information regarding the task performed on the switchgear.

15. A computer program element for controlling a system which when executed by a processor is configured to carry out the method of any of claims 10-14.
